# EUROPEAN PATENT SPECIFICATION

(11) **EP 3 162 983 B1**
(45) Date of publication and mention of the grant of the patent: **06.03.2019**
(21) Application number: 15382536.9
(22) Date of filing: 29.10.2015
(51) Int. Cl.: E04H 12/08

(54) **WIND TURBINE TOWERS**
WINDTURBINENTÜRME
TOURS D'ÉOLIENNE

(43) Date of publication of application: 03.05.2017
(73) Proprietor: GE Renewable Technologies Wind B.V., 4817 PA Breda (NL)
(72) Inventor: HERENCIA MORA, Rubén, 08206 SABADELL (ES); VILADOMIU I GUARRO, Pere, 08006 BARCELONA (ES); GONZÁLEZ DEL EGIDO, Alberto, 08018 BARCELONA (ES)
(74) Representative: ZBM Patents - Zea, Barlocci & Markvardsen

(56) References cited:
- EP-A1- 2 388 479
- EP-A1- 2 597 227
- WO-A1-2013/029626
- CN-U- 202 450 837

## Description

The present disclosure relates to transition sections for wind turbine support structures, in particular polygonal wind turbine towers. The disclosure further relates to wind turbine towers or tower portions comprising such transition sections and methods for constructing polygonal wind turbine towers and tower portions comprising such transition sections.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower. In order to extract a larger amount of energy from the wind, the blades are increasing in size and the towers are made taller to enable the rotor to capture more wind at higher altitudes.

Bending moments generated from the rotational overhanging rotor structure increase from the nacelle to the wind turbine tower base. The trend to build increasingly higher towers and larger rotors to extract increased power from the wind entails higher loads at the base of the tower. Thus, tower section diameter and wall thickness need to be increased per meter increase in height and rotor diameter. However, larger tower base sections (made with thicker walls and/or larger diameters) are more difficult and expensive to manufacture and very difficult to transport e.g. by road or vessel.

Up to 80 m, wind turbine towers have traditionally been made using steel tubular sections. Taller towers withstanding higher loads require stronger and stiffer, i.e. more robust, structures. Mainly due to supply chain and transportation limitations, bottom diameters larger than 4.5 m are not economically feasible. Such limitations result in non-linear increase of tower costs as the wall thickness is increased up to values that make the tower cost too high.

Two alternatives are known to deal with larger tower sections. On the one hand making the tower sections in situ (e.g. of concrete) is known. On the other hand, making these (and other) tower sections using prefabricated elements which are then assembled *in situ* is known. In some cases, prefabricated elements may comprise steel or concrete shell segments and connecting means for joining together the shell segments.

US20090021019 describes polygonal wind turbine towers and methods of mounting the same. However to mount these towers a large number of bolts, screw nuts and bolt extensions are required, especially at vertical flange connections. This entails rather cumbersome and time consuming installation process. CN 202 450 837 U describes a tower of polygonal cross section with a transition section.

It is further known that an increase in the tower base diameter can be achieved by using trapezoidal plates instead of rectangular plates. Alternatively or in combination with trapezoidal plates, plates of different thickness can be used to achieve a stronger tower base. However, the use of plates of different sizes, shapes and thicknesses increases manufacturing costs and complicates logistics. Particularly, in the case of cylindrical and conical towers, the shapes cut from the base plates lead to uneconomical use of steel and the additional plate rolling manufacturing step limits maximum dimensions and prevents in-situ manufacturing due to the size of the machines required, all of which increase the final cost of wind turbine towers.

It is an object of the present disclosure to provide wind turbine towers having polygonal tower sections which are assembled *in situ,* and at least partially overcome the prior art drawbacks mainly related to transportation and manufacturing costs.

### SUMMARY

In a first aspect, a transition tower section extending from an upper end to a lower end is disclosed. The upper end has a polygonal cross-section of X sides and the lower end has a polygonal cross-section of Y sides, wherein X is different from Y.

According to this aspect, a transitional tower section ending in polygonal cross-sections having different number of sides is provided. This allows connection of e.g. two support structures having or ending in a polygonal cross-section with a different number of sides. In some examples, X may be smaller than Y. This way, by merely increasing the number of sides a diameter increase is obtained which implies, e.g. in a wind turbine tower, an increase of the bending resistance of the structure.

Throughout the present description and claims a polygonal cross-section should be understood as a section with the shape of a polygon. And a polygon should be understood as a plane figure bounded by a finite chain of straight line segments closing in a loop to form a closed chain or circuit. These segments are called its sides (or edges), and the points where two sides meet are the polygon's vertices (or corners).
In some examples, the sides forming the polygonal cross-sections may have substantially the same length. This means that the plane figures (polygon) forming the cross-sections may be regular polygons.

According to the invention, the transition tower section may be arranged between an upper tower section ending in a polygonal cross-section of X sides and a lower tower section ending in a polygonal cross-section of Y sides, the upper and lower tower sections forming part of a wind turbine tower. This allows the construction of polygonal towers or tower portions with an increased diameter at e.g. the tower base by only increasing the number of sides of the polygonal cross-section. In these cases, the thickness, shape and size of the plates used to form the different tower sections can thus be more constant, as the increase in diameter is mainly achieved by changing the number of sides and not the thickness, size or shape of the plates forming each tower section. A substantial reduction of manufacture costs can thus be obtained as the number of substantially equal plates needed to build the tower or tower portion is increased while the number of plates of different sizes, thickness and shape can be reduced. Massive production of substantially equal plates reduces final manufacturing costs. It also facilitates transportation of the metal plates used to form the tower sections. And this is done at the same time as fatigue capability (increased diameter at the base) is improved. Absorption of higher bending loads at the base (or towards it) is thus also achieved.

As used herein, a tower section denotes each level of a tower structure (e.g. a wind turbine structure). A tower structure thus denotes several tower sections arranged vertically one above the other.

In some examples the transition tower section may be arranged between any two support structures or sections forming part of a wind turbine support structure such as e.g. between tower sections or between a tower section and a foundation, including e.g. a jacket, a monopile or any other foundation (fixed or floating). In further examples, a transition tower section substantially as hereinbefore described may even form part of the foundation itself, i.e. it could e.g. be embedded into the ground or into a foundation (e.g. made of concrete). In other examples, the transition tower section may be closed at their ends and empty inside so as to behave as a floating element. In more examples a transition section substantially as hereinbefore described may be provided between a bearing (e.g. a yaw bearing) and a tower section. In these cases, at least one of the bearing rings may be adapted to connect to a polygonal cross-section.

In some examples, the upper end may comprise an upper polygonal connection flange having X sides and/or the lower end may comprises lower polygonal connection flange having Y sides. The provision of flanges at any or both of the ends of the sections/structures to be connected facilitates connection between different sections or structures and the transition section.

In some of these examples, the upper connection flange and/or the lower connection flange may comprise a number of flange sectors joined together. The fact the flange is divided into smaller sections allows the use of efficient manufacturing process such as e.g. forging and machining, slab bending, welding and machining, steel plate cutting and machining. The provision of flange sectors is especially compatible and adaptable to tower sections or other support structures having (or ending in) a polygonal cross-section. In some of these cases the flange sectors may be welded together.

In some examples, the transition tower section may further comprise a peripheral wall extending from the upper end to the lower end. This way, the transition between the support structure or tower section of X sides to the support structure or tower section of Y sides is done in a substantially smooth manner along a surface of the peripheral wall.

In some examples, the peripheral wall may comprise a plurality of metal plates. The plates may be welded together by their sides so as to form a faceted wall. In some cases, the plates may be flat. In these cases, the plates do not require rolling/bending and can also be stacked and transported in a compact manner. They can be delivered by substantially any steel mill and can thus also be transported on standard truck trailers. This reduces transportation costs as no special transportation equipment is needed. Transportation costs can also be reduced e.g. by using a steel supplier that is located close to the place of installation.

In some examples, one or more metal plates forming the peripheral wall may have a substantially triangular shape. This improves sturdiness of the transition tower section as triangles are not easily deformed when a force acts on it. The amount of welding required can also be minimized by the use of triangular partitions.

In some cases, the metal plates forming the peripheral wall may be cut *in situ* e.g. from the same rectangular plates used to build the tower sections using a CNC machine. In these cases, shipment costs are also substantially reduced as the rectangular plates can be easily stacked for shipment. Alternatively, the metal plates may be delivered in a cut condition. The plates may further be delivered in a ready to use condition, e.g. with an anticorrosive cover. The cut plates may also be easily stacked for shipment over road on a trailer or in a ship.

In more examples the peripheral wall may be formed or casted in one piece/section together with connection flanges provided at the ends. This minimizes joints of the transition section.

In another aspect, a wind turbine tower or tower portion is provided. The tower (or tower portion) may comprise a first tower section ending in a polygonal cross-section of X sides at is lower end, a second tower section ending in a polygonal cross-section of Y sides at its upper end, wherein X is different from Y. The tower may further comprise a transition tower section substantially as hereinbefore described. The transition tower section may be arranged between the first and second tower sections. The upper end of the transition section may be connected to the lower end of the first tower section and the lower end of the transition section may be connected to the upper end of the second tower section. A polygonal tower or tower portion with a substantially conical overall appearance can thus be obtained by arranging a transition tower section substantially as hereinbefore described between at least two tower sections having different number of sides. This means that the conical appearance can mainly be obtained by varying the number of sides of the polygonal cross-section, not the thickness, size and/or shape of the plates forming the tower sections. The whole of the tower may be polygonal in some examples.

The assembly and erection of the tower (or tower section) may be done *in situ,* at the place of installation, in the field where the wind turbine is to be installed. Erection of the tower or tower section can be done with a crane or any other lifting device. The diameter increase is at least partly achieved by providing a different number of sides, not different plates. The plates forming the different tower sections may thus be more constant in thickness and/or width and/or length. This involves massive production of substantially equal plates which reduces the final manufacturing costs. Furthermore, and as mentioned above, transportation costs can also be reduced as the transport of stacked plates involves much less space than e.g. the transport of a whole tower section.

In a further aspect, a method for constructing a wind turbine tower or tower portion substantially as hereinbefore described is provided. The method comprises providing a plurality of steel plates, connecting X number of plates to each other, e.g. by welding the plates longitudinally, so as to form the first tower section having a polygonal cross-section of X sides, and connecting Y number of plates to each other, e.g. by welding the plates longitudinally, so as to form the second tower section having a polygonal cross-section of Y sides, wherein X is different than Y. The method further comprises providing a first transition tower section substantially as hereinbefore described, connecting the upper end of the first transition section to a lower end of the first tower section of X sides, e.g. by welding, and connecting the lower end of first the transition section to an upper end of the second tower section of Y sides, e.g. by welding.

In some examples, the method may further comprise connecting Z number of plates to each other, e.g. by welding the plates longitudinally, so as to form a third tower section having a polygonal cross-section of Z sides, wherein Z is different from Y and X. In some of these examples, Z may be bigger than Y and X. The method may further comprise providing a second transition tower section substantially as hereinbefore described. The second transition section may extend from an upper end having a polygonal cross-section of Y sides to a lower end having a polygonal cross-section of Z sides, wherein Z is different from Y. And the method further comprises connecting the upper end of the second transition section to a lower end of the second tower section of Y sides, e.g. by welding, and connecting the lower end of the second transition section to an upper end of the third tower section of Z sides, e.g. by welding. In some examples, Z may be bigger than Y.

In some examples, the plates forming the different tower sections may be rectangular plates. In others, the plates may be trapezoidal plates. In all examples, however, the plates forming the different tower sections may all have substantially the same size, thickness and shape. This ensures manufacture costs reduction.

In still a further aspect a wind turbine is provided. The wind turbine comprises a nacelle being supported on a vertical tower, wherein the tower comprises one or more transition tower sections substantially as hereinbefore described.

### BRIEF DESCRIPTION OF THE DRAWINGS

Non-limiting examples of the present disclosure will be described in the following, with reference to the appended drawings, in which:
Figures 1a - 1c show each an example of a transition tower section extending from a polygonal cross-section of six sides to a polygonal cross-section of eight sides;
Figures 2a and 2b show each an example of a transition tower section extending from a polygonal cross-section of eight sides to a polygonal cross-section of ten sides;
Figures 3a and 3b show each an example of a transition tower section extending from a polygonal cross-section of ten sides to a polygonal cross-section of twelve sides;
Figure 4a shows an example of a tower or tower portion made by joining together various transition tower sections substantially as hereinbefore described;
Figure 4b shows an exploded view of figure 4a; and
Figure 5 shows a tower or tower portion according to another example.

### DETAILED DESCRIPTION OF EXAMPLES

Throughout the following figures the same reference numbers will be used for matching parts.

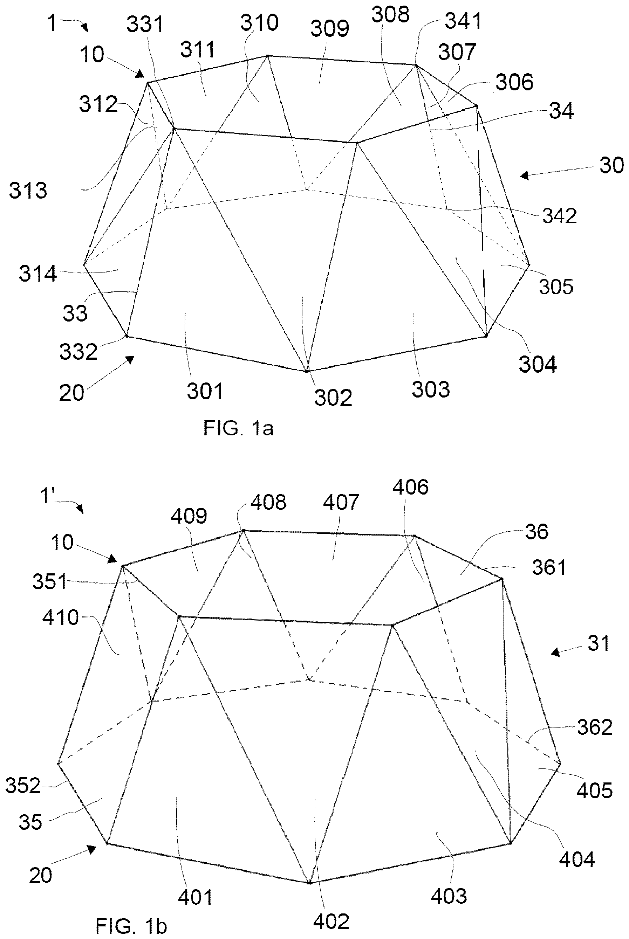

Figures 1a - 1c show examples of different transition tower sections 1, 1', 1" that may comprise an upper end 10, 90 having a polygonal cross-section of six sides and a lower end 20, 91 having a polygonal cross-section of eight sides.

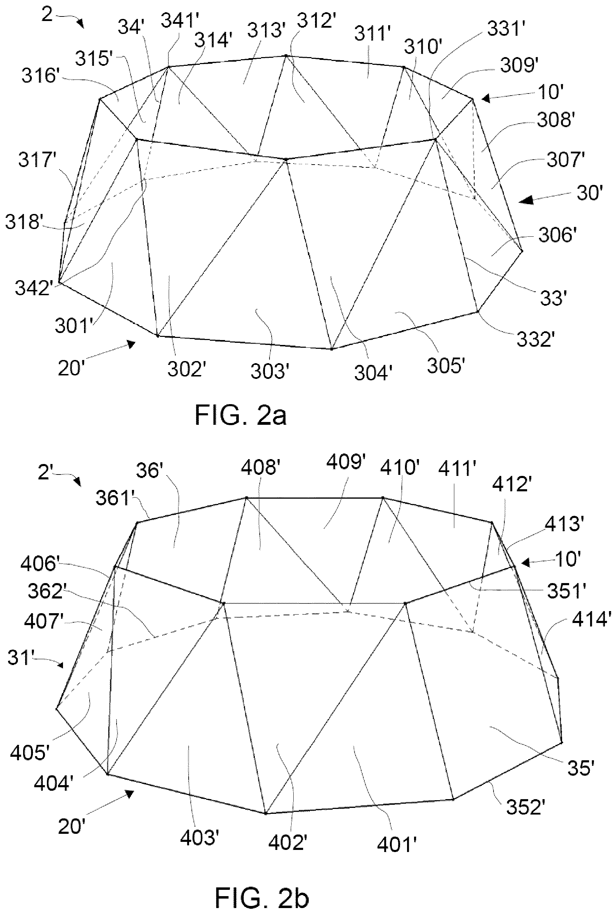

Figures 2a - 2b show examples of different transition tower sections 2, 2' that may comprise an upper end 10' having a polygonal cross-section of eight sides and a lower end 20' having a polygonal cross-section of ten sides.

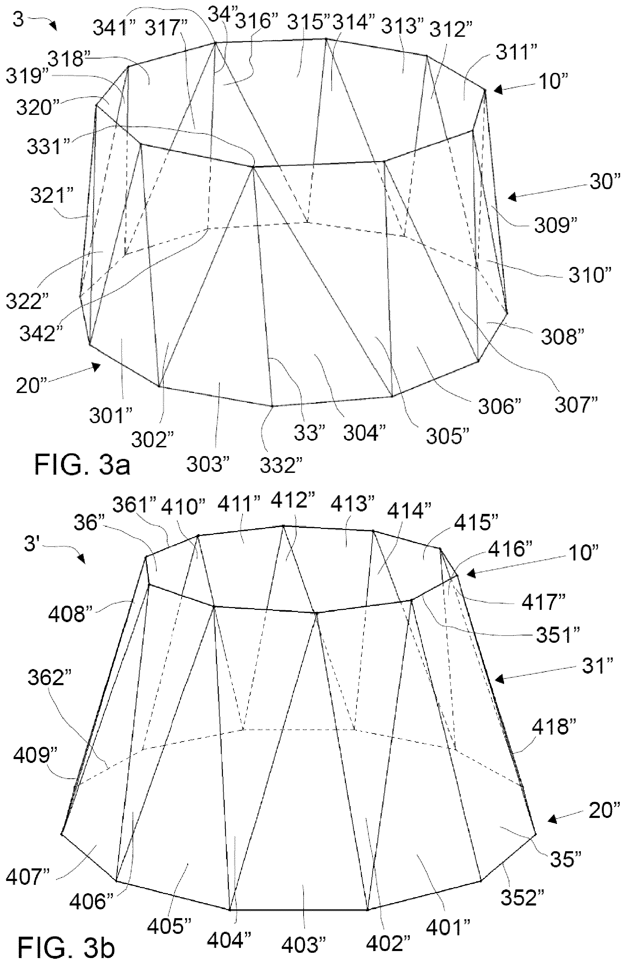

Figures 3a - 3b show examples of different transition tower sections 3, 3' that may comprise an upper end 10" having a polygonal cross-section of ten sides and a lower end 20" having a polygonal cross-section of twelve sides.

In further examples, alternative transition sections may be foreseen comprising other number of sides.

In some cases, the number of sides of the polygonal cross-sections may be an even number. This way, at least in terms of structural behaviour the polygonal cross-sections are characterized by sectional inertia symmetry thus enabling optimized use of the structure.

Examples of transition sections connecting polygonal tower sections with 6, 8 or 10 number of sides are especially suitable for connecting tower sections made with standard rectangular plates, i.e. and for building wind turbine towers with a hub height of 80-140 m. Massive production of substantially equal plates reduces final manufacturing costs.

In more examples, the upper end may have two more sides than the lower end, e.g. from six to eight as in the examples of figures 1a-1c or from eight to ten as in the examples of figures 2a and 2b, or from ten to twelve as in the example of figures 3a and 3b. In further examples, the polygonal cross-sections may have other number of sides, including uneven numbers. In yet further examples, the number of sides at each end of the transition tower section may differ in more than two sides or even a single side. However, transition sections having a difference of two or four sides between the upper end and the lower end ensure a substantially gradual transition from one end to the other.

In some examples a peripheral wall 30, 30', 30", 31, 31', 31", 32 may be provided. In these cases, the peripheral wall 30, 30', 30", 31, 31', 31", 32 may extend from the upper end 10, 10', 10", 90 to the lower end 20, 20', 20", 91. See figures 1a - 3b.

In the examples of figures 1a, 2a and 3a, the peripheral wall 30, 30' and 30" may be formed by welding together substantially identical triangular plates.

In the example of figure 1a, the peripheral wall 30 may comprise fourteen triangular plates 301-314. In the example of figure 2a, the peripheral wall 30' may comprise eighteen triangular plates 301'-318'. And in the example of figure 3a, the peripheral wall 30" may comprise twenty two triangular plates 301"-322". In alternative examples more or less number of triangular plates may form the peripheral wall depending on e.g. the number of sides at each end of the transition tower section.

In some examples, the triangular plates may have the shape of an isosceles triangle.

In the example of figure 1a, triangular plates 307 and 308 may be welded together with the same orientation (from upper to lower end of the transition section 1) so as to form a first edge 34 of the peripheral wall 30 and triangular plates 314 and 301 may be welded together with the same orientation so as to form a second edge 33 of the peripheral wall 30. The first 34 and second 33 edges may connect opposite vertices of the upper 331, 341 and lower 332, 342 ends polygonal cross-sections. And the peripheral wall 30 may be completed by welding together further triangular plates 309-313 and 302-306 that may be consecutively arranged one upside down with respect to the immediately consecutive one. Further in the example of figure 1a, the lower end 20 of eight sides may be formed by horizontal sides of triangular plates 301, 303, 305, 307, 308, 310, 312 and 314 and the upper end 10 of six sides may be formed by horizontal sides of triangular plates 302, 304, 306, 309, 311 and 313.

In the example of figure 2a, triangular plates 305' and 306' may be welded together with the same orientation (from upper to lower end of the transition section 2) so as to form a first edge 33' of the peripheral wall 30' and triangular plates 314' and 315' may be welded together with the same orientation so as to form a second edge 34' of the peripheral wall 30'. The first 33' and second 34' edges may connect opposite vertices of the upper 331', 341' and lower 332', 342' ends polygonal cross-sections. And the peripheral wall 30' may be completed by welding together further triangular plates 307'-313', 316'-318' and 301'-304' that may be consecutively arranged one upside down with respect to the immediately consecutive one. Further in the example of figure 2a, the lower end 20' of ten sides may be formed by horizontal sides of triangular plates 301', 303', 305', 306', 308', 310', 312', 314', 315' and 317' the upper end 10' of eight sides may be formed by horizontal sides of triangular plates 302', 304', 307', 309', 311', 313', 316' and 318'.

In the example of figure 3a, triangular plates 303" and 304" may be welded together with the same orientation (from upper to lower end of the transition section 3) so as to form a first edge 33" of the peripheral wall 30" and triangular plates 316" and 317" may be welded together with the same orientation so as to form a second edge 34" of the peripheral wall 30". The first 33" and second 34" edges may connect opposite vertices of the upper 331", 341" and lower 332", 342" ends polygonal cross-sections. And the peripheral wall 30" may be completed by welding together further triangular plates 305"-315", 318"-322" and 301"-302" that may be consecutively arranged one upside down with respect to the immediately consecutive one. Further in the example of figure 3a, the lower end 20" of twelve sides may be formed by horizontal sides of triangular plates 301", 303", 304", 306", 308", 310", 312", 314", 316", 317", 319" and 321" and the upper end 10" of ten sides may be formed by horizontal sides of triangular plates 302", 305", 307", 309", 311", 313", 315", 318", 320" and 322".

The examples of figures 1b, 2b and 3b respectively differ from that of figures 1a, 2a and 3a in that the peripheral wall 31, 31' and 31" may comprise two rectangular plates 35, 35', 35", 36, 36', 36" arranged in between a plurality of substantially identical triangular plates. The rectangular plates may be provided in correspondence with any two opposite sides of the upper 10, 10', 10" and lower 20, 20', 20" ends polygonal cross-sections and the triangular plates may be consecutively arranged one upside down with respect to the immediately consecutive one in between the rectangular plates 35, 35', 35", 36, 36', 36".

In the example of figure 1b the peripheral wall 31 may comprise ten triangular plates 401-410 and two rectangular plates 35 and 36. In the example of figure 2b, the peripheral wall 31' may comprise fourteen triangular plates 401'-414' and two rectangular plates 35' and 36'. And in the example of figure 3b, the peripheral wall 31" may comprise eighteen triangular plates 401"-418" and two rectangular plates 35" and 36". In alternative examples, other number of plates may be foreseen.

In the example of figure 1b, horizontal sides of triangular plates 401, 403, 405, 406, 408 and 410 together with a lower end of rectangular plates 35 and 36 may form the lower end 20 of eight sides and horizontal sides of triangular plates 402, 404, 407 and 409 together with an upper end of rectangular plates 35 and 36 may form the upper end 10 of six sides.

In the example of figure 2b, horizontal sides of triangular plates 401', 403', 405', 407', 408', 410', 412' and 414' together with a lower end of rectangular plates 35' and 36' may form the lower end 20' of ten sides and horizontal sides of plates 402', 404', 406', 409', 411' and 413' together with an upper end of rectangular plates 35' and 36' may form the upper end 10' of eight sides.

And in the example of figure 3b, horizontal sides of triangular plates 401 ", 403", 405", 407", 409", 410", 412", 414", 416" and 418" together with a lower end of rectangular plates 35" and 36" may form the lower end 20" of twelve sides and horizontal sides of triangular plates 402", 404", 406", 408", 411", 413", 415" and 417" together with an upper end of rectangular plates 35" and 36" may form the upper end 10" of ten sides.

In all cases, the triangular plates may be longitudinally welded to each other by their sides independently on whether they are oriented with a horizontal side pointing towards the same end (upper/lower) of the transition section or not.

In all cases, the triangular and/or rectangular plates may be of substantially identical thickness and a width of the rectangular plates may be substantially equal to a length of a horizontal side of the triangular plates.

In further examples, other ways of combining triangular plates for forming the peripheral wall may be foreseen, even with rectangular plates or not. Other known techniques for covering surfaces with triangles or other polygonal shapes may also be foreseen as long as the plates can be welded together.

In alternative examples, a truss structure that may be formed by bars connecting vertices of the upper end polygonal cross-section with vertices of the lower end polygonal cross-section may be used instead of the peripheral wall substantially as hereinbefore described.

In some examples the plates may be made of steel. In more examples, the plates may be flat plates. This also contributes to reducing manufacturing costs as flat plates are cheaper to manufacture than curved plates. This further contributes to reducing transport costs as stacking flat plates is easier than stacking e.g. curved plates.

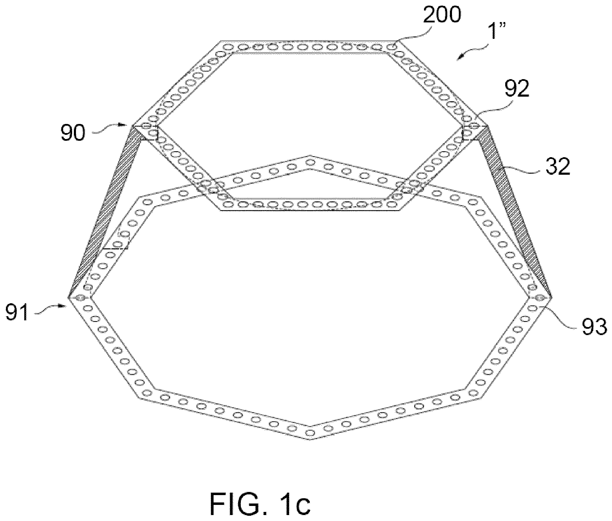

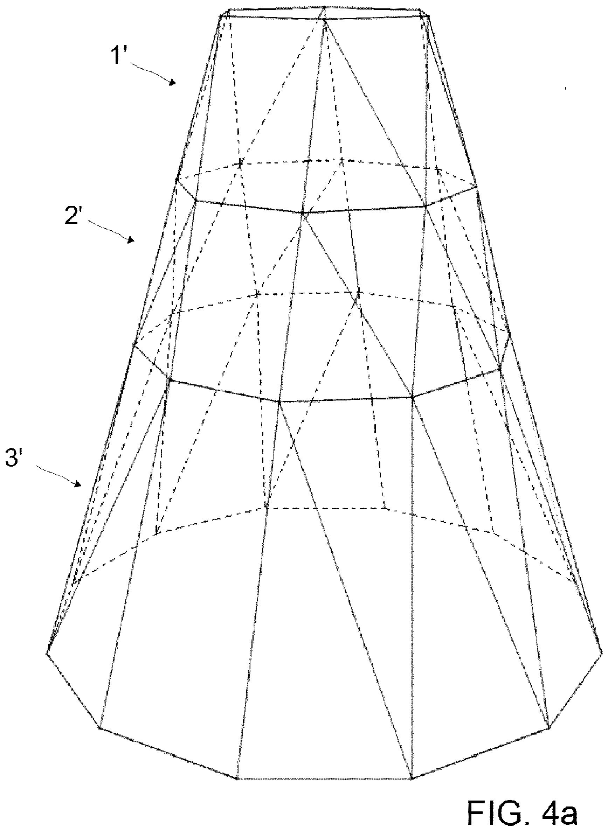

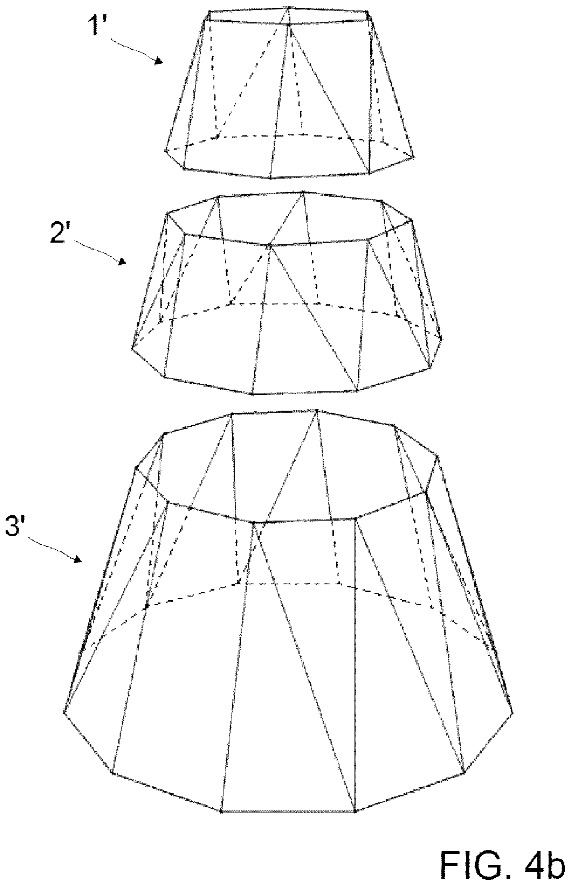

In the example of figure 1c, the transition tower section 1" may comprise a polygonal connection flange 92, 93 at each of the upper 90 and lower 91 ends. The flanges 92, 93 may respectively comprise six or eight sides as the upper 90 and lower 91 ends. In alternative examples, each flange may comprise other number of sides as long as they respectively match the number of sides of the upper and lower ends on which they are provided. In these examples, the flanges 92, 93 may be provided with holes 200 in order to allow the passage there through of tightening bolts such that a bolt connection between the transition section 1" and further support structures or tower sections (or further transition sections as will be explained in connection with figures 4a and 4b) can be achieved. Alternatively, the flanges may be connected to other support structures or tower sections by welding.

Further in this example, the peripheral wall 32 may be made of steel, e.g. formed or casted in one piece together with connection flanges 92, 93.

In summary, the transition sections of the examples of figures 1a-3b may have the common feature that on one side (e.g. the upper end) the polygonal cross-section may have X sides and in another side (e.g. the lower end) the polygonal cross-section may have X+2 sides. In addition X may be an even number and the sides may all have substantially the same length.

In particular, in the examples of figures 1a, 2a and 3a there may be a further common feature that two opposite upper vertices 341, 331; 341', 331'; 341", 331" may be aligned to match (be parallel) with two opposite lower vertices 342, 332; 342', 332'; 342", 332" so as to define opposite edges 34, 33; 34', 33'; 34", 33" of the peripheral wall. Or what is the same, an imaginary line traversing the two opposite upper vertices 341, 331; 341', 331'; 341", 331" may divide the upper polygon into two and matches an imaginary line traversing the two opposite lower vertices 342, 332; 342', 332'; 342", 332" and may divide the lower polygon into two. The peripheral wall may be built by providing triangles substantially as hereinbefore described.

And in the examples of figures 1b, 2b and 3b, there may be the following further common feature: that two opposite upper sides 361, 351; 361', 351'; 361", 351" may be aligned to be parallel with two opposite lower sides 362, 352; 362', 352'; 362", 352" so as to define parallel sides of the polygons. And the peripheral wall may be built by providing a rectangle in correspondence with the parallel sides and triangles in between the rectangles, substantially as hereinbefore described.

In all examples, welding may comprise the use of a composite material comprising e.g. a cementitious material, combined with reinforcing elements that may be simple, pre-stressed or post-stressed reinforcements such as fibres, bars or cables that may be embedded, bonded or un-bonded to a matrix, functioning passively or actively.

Figure 4a shows a tower or tower portion that may be made by joining together, e.g. by welding, a transitional tower section 1' as shown in figure 1b, a further transition tower section 2' as shown in figure 2b and another transition tower section 3' as shown in figure 3b. Figure 4b shows an exploded view of the tower or tower section shown in figure 4a. In alternative examples, other number of transition tower sections may be arranged on top of each other to form a tower or tower portion.

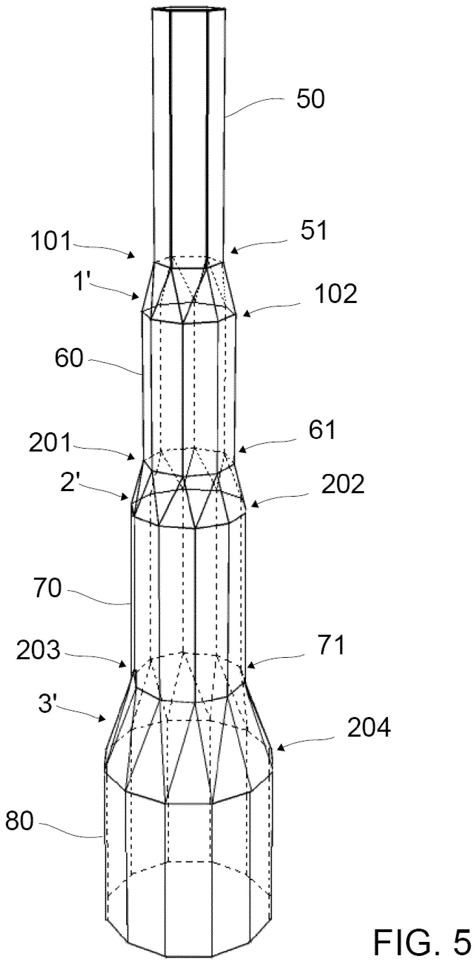

Figure 5 shows an example of a tower or tower portion, e.g. a wind turbine tower that may be formed using transition tower sections substantially as hereinbefore described. In this example, six rectangular flat plates may be longitudinally welded so as to form a first tower section 50 having a hexagonal cross-section. A transition section 1' substantially as described in connection with figure 1b may be connected (e.g. by welding) to a lower end 51 of the first tower section 50. In alternative examples, a transition section as shown in any of figures 1a or 1c may also be used as long as the number of sides of the lower end 51 of the first tower section 50 coincides with a number of sides at an upper end 101 of the transition section 1'.

Alternatively, more than one first tower sections having a hexagonal cross-section may be arranged (e.g. by welding each other) one on top of each other so as to form a higher tower section.

The tower shown in the example of figure 5 may further comprise a second tower section 60 that may be formed by longitudinally welding eight rectangular flat plates thus forming a tower section having an octagonal cross-section. The second tower section 60 may be connected (e.g. by welding) to a lower end 102 of the transition section 1'. The lower end 102 of the transition section 1' may be configured to be welded to other tower portions or it may be provided with a flange e.g. for a bolted connection between the transition section and the tower section.

The tower shown in the example of figure 5 may further comprise a transition section 2' substantially as described in connection with figure 2b that may be connected (e.g. by welding) to a lower end 61 of the second tower section 60. In alternative examples a transition section as shown in figure 2a may also be used as long as the number of sides of the lower end 61 of the second tower section 60 coincides with a number of sides at an upper end 201 of the transition section 2'. Alternatively, a transition section casted in one piece substantially as explained in connection with figure 1c may also be used as long as the number of sides is adapted to the number of sides of the tower section on which it will be mounted.

A third tower section 70 may further be provided (e.g. by welding) below the transition section 2'. The third tower section 70 may be formed by longitudinally welding ten rectangular flat plates thus forming a tower section having a decagonal cross-section which matches with a lower end 202 of the transition section 2'.

A transition section 3' substantially as described in connection with figure 3b may further be provided, e.g. by welding, below the third tower section 70. In alternative examples, a transition section as shown in figure 3a may also be used as long as the number of sides at a lower end 71 of the third tower section 70 coincides with a number of sides at an upper end 203 of the transition section 3'.

A fourth tower section 80 may further be arranged below transition section 3'. The fourth tower section 80 may be formed by longitudinally welding twelve rectangular flat plates thus forming a tower section having a dodecagonal cross-section which matches with a lower end 204 of transition section 3'.

Although figure 5 has been described from top to bottom, it is understood that erection of a tower will normally start from the bottom (base) and each tower section or transition section will be mounted on top of the previously mounted section.

In all cases the rectangular plates used to form the tower sections may be substantially equal, i.e. same shape, size and thickness. This way, manufacture costs reduction can be achieved. In more examples, other number of rectangular plates may be used to form the tower sections with different polygonal cross-sections. Thus, towers having a bigger diameter so as to be able to withstand higher bending moments can be built in a cost-effective manner. This involves a cost-effective manufacture cost as all plates used for forming the different tower sections can be made substantially identical and the diameter increase can be achieved mainly by varying the amount of sides of each or at least some of the tower sections. Or what is the same easier transportation, more effective manufacture and more efficient use of material can be achieved.

In general, standardized steel plates may vary their dimensions as a function of the region/market but they may usually be found between 10 to 12 meters long and 2.5 to 3 meters wide. Another known industry practice is to standardize plates by their weight. In that sense, steel plate length, width and thickness combinations which may weigh between 10 and 12 tons may usually be widely available. Polygonal tower sections substantially as hereinbefore described may thus benefit from economies of scale/massive production of raw material, simplified logistics, stock management and reduced material scrapping.

In further examples, trapezoidal plates may be used instead of rectangular plates. Alternatively, some tower sections may be made using rectangular plates and others using trapezoidal plates, depending on the desired bending resistance at each height of the wind turbine tower. The resulting overall appearance of a tower section made using trapezoidal plates may be conical thus enhancing its bending resistance. In these cases, massive production of substantially equal plates (thickness, length and width) may be maintained as the trapezoidal plates may be cut *in situ* with a CNC machine substantially as explained in connection with the transition section.

In some examples, a first support structure (e.g. a tower section) may comprise a polygonal cross-section of n sides and a second support structure (e.g. a tower section) may comprise a polygonal cross-section of n+4 (n plus four) sides. In these cases, a transition section substantially as hereinbefore described may be provided in between the first and second support structures. Such a transition section may have an upper end comprising a polygonal cross-section of n sides and a lower end comprising a polygonal cross-section of n+4 sides. Alternatively, two transition sections substantially as hereinbefore described may be provided in between the first and second support structures, a first transition section having an upper end of n sides and a lower end of n+2 sides and a second transition section having an upper end of n+2 sides and a lower end of n+4 sides. In these examples, the first transition section may be mounted on top of the second transition section so as to connect the first support structure of n sides to the second support structure of n+4 sides. Other number of sides may nevertheless be foreseen in further alternative examples depending on circumstances.

In more examples, a wind turbine tower may comprise a first tower section having a polygonal cross-section of eight sides that may in turn be mounted on top a transition section that transits from eight to ten sides. The transition section (8 to 10) may in turn be mounted on top of a tower section having a polygonal cross-section of ten sides which may also in turn be mounted on top of a further transition section (10 to 12). The transition section (10 to 12) may in turn be mounted on top of a tower section having a cross-section of twelve sides. In these cases, the tower sections may be welded to the transition sections. Alternatively, mounting flanges with holes for establishing bolted connections between sections may be foreseen.

In some examples, the plates having substantially the same thickness may have a thickness from 20 mm to 26 mm. Furthermore, plates having substantially the same size may range between 10 to 12 meters in length and between 2.5 to 3 meters in width. In these examples, in order to design a polygonal (or partly polygonal) wind turbine tower having a desired load distribution over height, the variable that may be varied is the diameter of the tower sections. Furthermore, when designing a diameter increase care should be taken not to hinder rotation of the blades, especially under high wind speed conditions. Or put in other words, the hub height minus the rotor radius defines a level (in height) above which care should be taken when defining the tower external diameter not to touch a blade tip, especially under high wind speed conditions (involving higher oscillations). As explained above, the diameter can be varied mainly by varying the number of sides of the polygonal cross-sections and interposing transition sections substantially as hereinbefore described whenever necessary. In an example, the diameter of a wind turbine tower may range from e.g. 6m to e.g. 7.5 m along the height of the wind turbine tower. And the number of sides of the polygonal cross-section along the tower's height may depend on the desired diameter, the steel quality and cost.

In some examples, the transition tower sections substantially as hereinbefore described may be manufactured at a factory and transported to an erection site for final assembly of the wind turbine tower. This still minimizes overall dimensions and mass of the structure being transported as it is foreseen that a transition structure does not need to have a dimension as high as a tower section.

## Claims

1. A wind turbine tower comprising
a first tower section (50) ending in a polygonal cross-section of X sides at its lower end (51),
a second tower section (60) ending in a polygonal cross-section of Y sides at its upper end, **characterized in that** X is different from Y and
the tower further comprises a transition tower section (1; 1'; 1"; 2; 2'; 3, 3') extending from an upper end (10; 90; 10'; 10"; 203) to a lower end (20; 91; 20'; 20"; 202), wherein the upper end (10; 90; 10'; 10"; 203) has a polygonal cross-section of X sides and the lower end (20; 91; 20'; 20"; 202) has a polygonal cross-section of Y sides, wherein X is different from Y, the transition section (1; 1'; 1"; 2; 2'; 3, 3') being arranged between the first and second tower sections, wherein the upper end (10; 90; 10'; 10"; 203) of the transition section is connected to the lower end (51) of the first tower section (50) and the lower end (20; 91; 20'; 20"; 202) of the transition section is connected to the upper end of the second tower section (60), wherein the first tower section (50) and the second tower section (60) comprise a plurality of metal plates, each plate having substantially the same rectangular shape and the plates being welded together longitudinally so as to form a prism having the polygonal cross-section of X and/or Y sides respectively.

2. The wind turbine tower of claim 1, wherein the upper end (10; 90; 10'; 10"; 203) of the transition section comprises an upper polygonal connection flange (92) having X sides and/or the lower end (20; 91; 20'; 20"; 202) of the transition section comprises a lower polygonal connection flange (93) having Y sides.

3. The wind turbine tower of claim 2, wherein the upper connection flange (92) and/or the lower connection flange (93) comprises a number of flange sectors.

4. The wind turbine tower of any of claims 1 - 3, wherein the upper end (10; 90; 10'; 10"; 203) of the transition section comprises an upper edge configured to be welded to an edge of the upper tower section and/or the lower end (20; 91; 20'; 20"; 202) of the transition section comprises a lower edge configured to be welded respectively to an edge of the lower tower section.

5. The wind turbine tower of any of claims 1 - 4, wherein the transition section further comprises a peripheral wall (30, 30', 30", 31, 31', 31", 32) extending from the upper end (10; 90; 10'; 10"; 203) to the lower end (20; 91; 20'; 20"; 202), wherein the peripheral wall (30, 30', 30", 31, 31', 31", 32) comprises a plurality of metal plates, the plates being welded together by their sides so as to form a faceted wall.

6. The wind turbine tower of claim 5, wherein one or more metal plates have a substantially triangular shape (301-314; 301'-318'; 301"-322"; 401-410; 401'-414'; 401"-418").

7. The wind turbine tower of any claims 2 or 3, wherein the transition section further comprises a peripheral wall (30, 30', 30", 31, 31', 31", 32) extending from the upper end (10; 90; 10'; 10"; 203) to the lower end (20; 91; 20'; 20"; 202), wherein the peripheral wall and the connection flanges are made as a single cast piece.

8. The wind turbine tower of any of claims 1 - 7, wherein X is smaller than Y.

9. The wind turbine tower of claim 8, wherein Y is equal to X plus 2.

10. The wind turbine tower of any of claims 1 - 9, further comprising a third tower section (70) ending in a polygonal cross-section having Z sides at its upper end (71), wherein a lower end (61) of the second tower section (60) comprises a polygonal cross-section of Y side, and Z is different from Y, and the tower further comprises a second transition tower section having an upper end with a polygonal cross-section of Y sides and a lower end with a polygonal cross-section of Z sides and the second transition tower section is arranged between the second (60) and third (70) tower sections, the upper end of the second transition section being connected to the lower end (61) of the second tower section and the lower end of the second transition section being connected to the upper end (71) of the third tower section.

11. A method for constructing a wind turbine tower according to any of claims 1-10 comprising:
providing a plurality of plates,
connecting X number of plates to each other by welding the plates longitudinally so as to form a first tower section having a polygonal cross-section of X sides,
connecting Y number of plates to each other by welding the plates longitudinally so as to form a second tower section having a polygonal cross-section of Y sides, wherein X is different than Y,
providing a first transition tower section,
connecting the upper end of the first transition section to a lower end of the first tower section of X sides, and
connecting the lower end of the first the transition section to an upper end of the second tower section of Y sides.

12. The method of claim 11, further comprising
connecting Z number of plates to each other by welding the plates longitudinally so as to form a third tower section having a polygonal cross-section of Z sides, wherein Z is different from Y,
providing a second transition tower section extending from an upper end having a polygonal cross-section of Y sides to a lower end having a polygonal cross-section of Z sides, wherein Z is different from Y,
connecting the upper end of the second transition section to a lower end of the second tower section of Y sides, and
connecting the lower end of the second transition section to an upper end of the third tower section of Z sides.

13. A wind turbine comprising a nacelle being supported on a vertical tower according to any of claims 1 - 10.

## Patentansprüche

1. Ein Windturbinenturm umfassend
einen ersten Turmabschnitt (50), der in einem polygonalen Querschnitt von X Seiten an seinem unteren Ende (51) endet,
einen zweiten Turmabschnitt (60), der in einem polygonalen Querschnitt von Y Seiten an seinem oberen Ende endet, **dadurch gekennzeichnet, dass** X verschieden von Y ist und
wobei der Turm weiterhin einen Übergangsturmabschnitt (1; 1'; 1"; 2; 2'; 3, 3') umfasst, der sich von einem oberen Ende (10; 90; 10'; 10"; 203) bis zu einem unteren Ende (20; 91; 20'; 20"; 202) erstreckt, wobei das obere Ende (10; 90; 10'; 10"; 203) einen polygonalen Querschnitt von X Seiten hat und das untere Ende (20; 91; 20'; 20"; 202) einen polygonalen Querschnitt von Y Seiten hat, wobei X verschieden von Y ist, wobei der Übergangsabschnitt (1; 1'; 1"; 2; 2'; 3, 3') zwischen dem ersten und dem zweiten Turmabschnitt angeordnet ist, wobei das obere Ende (10; 90; 10'; 10"; 203) des Übergangsabschnitts mit dem unteren Ende (51) des ersten Turmabschnitts (50) verbunden ist und das untere Ende (20; 91; 20'; 20"; 202) des Übergangsabschnitts mit dem oberen Ende des zweiten Turmabschnitts (60) verbunden ist, wobei der erste Turmabschnitt (50) und der zweite Turmabschnitt (60) eine Vielzahl von Metallplatten umfassen, wobei jede Platte im Wesentlichen die gleiche rechteckige Form hat und die Platten aneinander längsgeschweißt sind, um ein Prisma zu bilden, das den polygonalen Querschnitt von jeweils X und/oder Y Seiten hat.

2. Der Windturbinenturm des Anspruchs 1, wobei das obere Ende (10; 90; 10'; 10"; 203) des Übergangsabschnitts einen oberen polygonalen Anschlussflansch (92) umfasst, der X Seiten hat und/oder das untere Ende (20; 91; 20'; 20"; 202) des Übergangsabschnitts einen unteren polygonalen Anschlussflansch (93) umfasst, der Y Seiten hat.

3. Der Windturbinenturm des Anspruchs 2, wobei der obere Anschlussflansch (92) und/oder der untere Anschlussflansch (93) eine Anzahl von Flanschabschnitten umfasst.

4. Der Windturbinenturm von einem der Ansprüche 1 - 3, wobei das obere Ende (10; 90; 10'; 10"; 203) des Übergangsabschnitts eine obere Kante umfasst, die konfiguriert ist, um an eine Kante des oberen Turmabschnitts angeschweißt zu werden und/oder das untere Ende (20; 91; 20'; 20"; 202) des Übergangsabschnitts eine untere Kante umfasst, die konfiguriert ist, um jeweils an eine Kante des unteren Turmabschnitts angeschweißt zu werden.

5. Der Windturbinenturm von einem der Ansprüche 1 - 4, wobei der Übergangsabschnitt weiterhin eine periphere Wand (30, 30', 30", 31, 31', 31", 32) umfasst, die sich von dem oberen Ende (10; 90; 10'; 10"; 203) bis zum unteren Ende (20; 91; 20'; 20"; 202) erstreckt, wobei die periphere Wand (30, 30', 30", 31, 31', 31", 32) eine Vielzahl von Metallplatten umfasst, wobei die Platten durch deren Seiten zusammengeschweißt sind, um eine facettierte Wand zu bilden.

6. Der Windturbinenturm des Anspruchs 5, wobei eine oder mehrere Metallplatten eine im Wesentlichen dreieckige Form (301-314; 301'-318'; 301"-322"; 401-410; 401'- 414'; 401"-418") haben.

7. Der Windturbinenturm von einem der Ansprüche 2 oder 3, wobei der Übergangsabschnitt weiterhin eine periphere Wand (30, 30', 30", 31, 31', 31", 32) umfasst, die sich von dem oberen Ende (10; 90; 10'; 10"; 203) bis zum unteren Ende (20; 91; 20'; 20"; 202) erstreckt, wobei die periphere Wand und die Anschlussflansche als ein einziges Gussstück gebildet sind.

8. Der Windturbinenturm von einem der Ansprüche 1 - 7, wobei X kleiner als Y ist.

9. Der Windturbinenturm des Anspruchs 8, wobei Y gleich X plus 2 ist.

10. Der Windturbinenturm von einem der Ansprüche 1 - 9, weiterhin umfassend einen dritten Turmabschnitt (70), der in einem polygonalen Querschnitt endet, der Z Seiten an seinem oberen Ende (71) hat, wobei ein unteres Ende (61) des zweiten Turmabschnitts (60) einen polygonalen Querschnitt von Y Seiten umfasst, und Z verschieden von Y ist, und wobei der Turm weiterhin einen zweiten Übergangsturmabschnitt umfasst, der ein oberes Ende mit einem polygonalen Querschnitt von Y Seiten hat und ein unteres Ende mit einem polygonalen Querschnitt von Z Seiten hat und der zweite Übergangsturmabschnitt zwischen dem zweiten (60) und dem dritten (70) Turmabschnitt angeordnet ist, wobei das obere Ende des zweiten Übergangsabschnitts mit dem unteren Ende (61) des zweiten Turmabschnitts verbunden ist und das untere Ende des zweiten Übergangsabschnitts mit dem oberen Ende (71) des dritten Turmabschnitts verbunden ist.

11. Ein Verfahren zum Zusammenbau von einem Windturbinenturm nach einem der Ansprüche 1-10 umfassend:
bereitstellen von einer Vielzahl von Platten,
verbinden von einer Anzahl X von Platten miteinander, indem die Platten längsgeschweißt werden, um einen ersten Turmabschnitt zu bilden, der einen polygonalen Querschnitt von X Seiten hat.
verbinden von einer Anzahl Y von Platten miteinander, indem die Platten längsgeschweißt werden, um einen zweiten Turmabschnitt zu bilden, der einen polygonalen Querschnitt von Y Seiten hat, wobei X verschieden von Y ist,
bereitstellen von einem ersten Übergangsturmabschnitt,
verbinden des oberen Endes des ersten Übergangsabschnitts mit einem unteren Ende des ersten Turmabschnitts von X Seiten, und
verbinden des unteren Endes des ersten Übergangsabschnitts mit einem oberen Ende des zweiten Turmabschnitts von Y Seiten.

12. Das Verfahren des Anspruchs 11, weiterhin umfassend
verbinden von einer Anzahl Z von Platten miteinander, indem die Platten längsgeschweißt werden, um einen dritten Turmabschnitt zu bilden, der einen polygonalen Querschnitt von Z Seiten hat, wobei Z verschieden von Y ist,
bereitstellen von einem zweiten Übergangsturmabschnitt, der sich von einem oberen Ende, das einen polygonalen Querschnitt von Y Seiten hat, bis zu einem unteren Ende erstreckt, das einen polygonalen Querschnitt von Z Seiten hat, wobei Z verschieden von Y ist,
verbinden des oberen Endes des zweiten Übergangsabschnitts mit einem unteren Ende des zweiten Turmabschnitts von Y Seiten, und
verbinden des unteren Endes des zweiten Übergangsabschnitts mit einem oberen Ende des dritten Turmabschnitts von Z Seiten.

13. Eine Windturbine umfassend eine Gondel, die auf einem vertikalen Turm nach einem der Ansprüche 1 - 10 gestützt ist.

## Revendications

1. Une tour d'éolienne comprenant
une première section de tour (50) aboutissant dans une section transversale polygonale de X côtés dans son extrémité inférieure (51),
une deuxième section de tour (60) aboutissant dans une section transversale polygonale de Y côtés dans son extrémité supérieure, **caractérisée en ce que** X est différent de Y et
la tour comprend en outre une section de tour de transition (1 ; 1' ; 1" ; 2 ; 2' ; 3, 3') s'étendant d'une extrémité supérieure (10 ; 90 ; 10' ; 10" ; 203) à une extrémité inférieure (20 ; 91 ; 20' ; 20" ; 202), dans laquelle l'extrémité supérieure (10 ; 90 ; 10' ; 10" ; 203) a une section transversale polygonale de X côtés et l'extrémité inférieure (20 ; 91 ; 20' ; 20" ; 202) a une section transversale polygonale de Y côtés, où X est différent de Y, la section de transition (1 ; 1' ; 1" ; 2 ; 2' ; 3, 3') étant disposée entre les sections de tour première et deuxième, dans laquelle l'extrémité supérieure (10 ; 90 ; 10' ; 10" ; 203) de la section de transition est connectée à l'extrémité inférieure (51) de la première section de tour (50) et l'extrémité inférieure (20 ; 91 ; 20' ; 20" ; 202) de la section de transition est connectée à l'extrémité supérieure de la deuxième section de tour (60), dans laquelle la première section de tour (50) et la deuxième section de tour (60) comprennent une pluralité de plaques en métal, chaque plaque ayant essentiellement la même forme rectangulaire et les plaques étant soudées de façon longitudinale les unes aux autres de façon à former un prisme ayant la section transversale polygonale de X et/ou Y côtés respectivement.

2. La tour d'éolienne de la revendication 1, dans laquelle l'extrémité supérieure (10 ; 90 ; 10' ; 10" ; 203) de la section de transition comprend une bride de raccordement polygonale supérieure (92) ayant X côtés et/ou l'extrémité inférieure (20 ; 91 ; 20' ; 20" ; 202) de la section de transition comprend une bride de raccordement polygonale inférieure (93) ayant Y côtés.

3. La tour d'éolienne de la revendication 2, dans laquelle la bride de raccordement supérieure (92) et/ou la bride de raccordement inférieure (93) comprend un certain nombre de régions de bride.

4. La tour d'éolienne de l'une quelconque des revendications 1 - 3, dans laquelle l'extrémité supérieure (10 ; 90 ; 10' ; 10" ; 203) de la section de transition comprend un bord supérieur configuré pour être soudé à un bord de la section de tour supérieure et/ou l'extrémité inférieure (20 ; 91 ; 20' ; 20" ; 202) de la section de transition comprend un bord inférieur configuré pour être soudé respectivement à un bord de la section de tour inférieure.

5. La tour d'éolienne de l'une quelconque des revendications 1 - 4, dans laquelle la section de transition comprend en outre une paroi périphérique (30, 30', 30", 31, 31', 31", 32) s'étendant de l'extrémité supérieure (10 ; 90 ; 10' ; 10" ; 203) à l'extrémité inférieure (20 ; 91 ; 20' ; 20" ; 202), dans laquelle la paroi périphérique (30, 30', 30", 31, 31', 31", 32) comprend une pluralité de plaques en métal, les plaques étant soudées les unes aux autres par leurs côtés de façon à former une paroi à facettes.

6. La tour d'éolienne de la revendication 5, dans laquelle une ou plusieurs plaques en métal ont une forme essentiellement triangulaire (301-314 ; 301'-318' ; 301"-322" ; 401-410 ; 401'- 414' ; 401"-418").

7. La tour d'éolienne de l'une quelconque des revendications 2 ou 3, dans laquelle la section de transition comprend en outre une paroi périphérique (30, 30', 30", 31, 31', 31", 32) s'étendant de l'extrémité supérieure (10 ; 90 ; 10' ; 10" ; 203) à l'extrémité inférieure (20 ; 91 ; 20' ; 20" ; 202), dans laquelle la paroi périphérique et les brides de raccordement sont réalisées comme une seule pièce moulée.

8. La tour d'éolienne de l'une quelconque des revendications 1 - 7, dans laquelle X est inférieur à Y.

9. La tour d'éolienne de la revendication 8, dans laquelle Y est égal à X plus 2.

10. La tour d'éolienne de l'une quelconque des revendications 1 - 9, comprenant en outre une troisième section de tour (70) aboutissant dans une section transversale polygonale ayant Z côtés dans son extrémité supérieure (71), dans laquelle une extrémité inférieure (61) de la deuxième section de tour (60) comprend une section transversale polygonale de Y côtés, et Z est différent de Y, et la tour comprend en outre une deuxième section de tour de transition ayant une extrémité supérieure avec une section transversale polygonale de Y côtés et une extrémité inférieure avec une section transversale polygonale de Z côtés et la deuxième section de tour de transition est disposée entre les sections de tour deuxième (60) et troisième (70), l'extrémité supérieure de la deuxième section de transition étant connectée à l'extrémité inférieure (61) de la deuxième section de tour et l'extrémité inférieure de la deuxième section de transition étant connectée à l'extrémité supérieure (71) de la troisième section de tour.

11. Un procédé de construction d'une tour d'éolienne selon l'une quelconque des revendications 1-10 comprenant :
fournir une pluralité de plaques,
connecter un nombre X de plaques les unes aux autres en soudant les plaques de façon longitudinale de façon à former une première section de tour ayant une section transversale polygonale de X côtés,
connecter un nombre Y de plaques les unes aux autres en soudant les plaques de façon longitudinale de façon à former une deuxième section de tour ayant une section transversale polygonale de Y côtés, où X est différent de Y,
fournir une première section de tour de transition,
connecter l'extrémité supérieure de la première section de transition à une extrémité inférieure de la première section de tour de X côtés, et
connecter l'extrémité inférieure de la première section de transition à une extrémité supérieure de la deuxième section de tour de Y côtés.

12. Le procédé de la revendication 11, comprenant en outre
connecter un nombre Z de plaques les unes aux autres en soudant les plaques de façon longitudinale de façon à former une troisième section de tour ayant une section transversale polygonale de Z côtés, où Z est différent de Y,
fournir une deuxième section de tour de transition s'étendant d'une extrémité supérieure ayant une section transversale polygonale de Y côtés à une extrémité inférieure ayant une section transversale polygonale de Z côtés, où Z est différent de Y,
connecter l'extrémité supérieure de la deuxième section de transition à une extrémité inférieure de la deuxième section de tour de Y côtés, et
connecter l'extrémité inférieure de la deuxième section de transition à une extrémité supérieure de la troisième section de tour de Z côtés.

13. Une éolienne comprenant une nacelle étant supportée sur une tour verticale selon l'une quelconque des revendications 1 - 10.
